Europäisches Patentamt

European Patent Office

Office européen des brevets

(11) Numéro de publication: **0 452 602 A1**

## (12) DEMANDE DE BREVET EUROPEEN

(21) Numéro de dépôt: **90470020.0**

(22) Date de dépôt: **17.04.90**

(51) Int. Cl.5: **A01G 13/04**

(43) Date de publication de la demande:
**23.10.91 Bulletin 91/43**

(84) Etats contractants désignés:
**BE DE ES FR GB IT NL SE**

(71) Demandeur: **Gimay, Daniel**
**2, Impasse des roses**
**F-57730 Folschviller(FR)**

(72) Inventeur: **Gimay, Daniel**
**2, Impasse des roses**
**F-57730 Folschviller(FR)**

(54) Dispositif à effet de serre pour couvrir des surfaces plantées.

(57) Il est constitué d'une gaine plastique (1) dans laquelle des montants (2) précontraints en (4) et maintenus par une tête (3) sont introduits. L'action de la contrainte (4) sur les montants (2) imprime une forme géométrique par réaction de la gaine (1). Un ou plusieurs intercallaires (5) sont clipsés sur les montants (2). D'un support à rainures en torsade (8), d'un adapteur (10) de positionnement le long du support (8), d'un sabot (14) et d'un étrier (16) for- mant adapteur de fixation sur cadre tubulaire (17) pourvu de raccords (23) et de canules d'irrigation (19). Le cadre (17) est fixé en rotation par des paliers lisses (22) sur des bras (21) rendus escamo- tables par relevage à crémaillères (24).

Le dispositif selon l'invention est particulièrement destiné à couvrir des surfaces plantées de plantes maraichères et ornementales.

FIG.3

EP 0 452 602 A1

La présente invention concerne un dispositif à effet de serre pour couvrir des surfaces plantées de plantes grimpantes.

Actuellement, la couverture des surfaces plantées s'effectue en général au moyen d'un film plastique posé sur arceaux maintenu par des cordes ancrées au moyen de piquets enfoncés dans le sol, ou des éléments rigides en fibre de verre que l'on emboite les uns dans les autres, mais ne permet pas ou difficilement de couvrir des surfaces plantées de plantes grimpantes. Le dispositif selon l'invention permet de remédier à cet inconvénient.

Il comporte en effet, une gaine plastique ouverte aux deux extrémités, dans laquelle sont enfilés des montants préformés avec contrainte et maintenus par une tête perforée. Quand la contrainte est lachée, par les montants, elle imprime une forme géométrique en réaction de la gaine à l'ensemble du dispositif. Un ou plusieurs intercallaires sont clipsés sur les montants pour en maintenir la géométrie. La gaine est positionnée sur les montants de manière à laisser un espace libre à ceux-ci afin d'assurer l'encrage du dispositif La gaine est rassemblée et maintenue autour de la tête au moyen d'un lien en plastique.

Selon deux formes de réalisations préférentielles les montants sont au nombre de quatre où six suivant le diamètre de la gaine compris entre trois cents et sept cents millimètres. Les intercallaires sont au nombre de un deux ou trois, suivant la hauteur de la gaine comprise entre trois cents et mille cinq cents millimètres.

Un support muni sur son pourtour extérieur et toute sa hauteur, de rainures en torsade, ne permettant à aucune ligature de glisser le long de ce support. Un adapteur amovible pouvant être posé sur la tête par emmanchement forcé et muni d'un blocage par excentrique, permet de positionner le dispositif le long de ce support.

Selon une variante, un adapteur amovible en forme d'étrier, pouvant être posé sur la tête par emmanchement forcé permet de juxtaposer des dispositifs sur un cadre. Ce cadre est fixé en rotation par l'intermédaire de paliers lisses sur des bras articulés et rendus escamotables autour d'un axe au moyen de crémaillères de relevage.

Selon une forme de réalisation préférentielle le cadre est tubulaire, muni de raccords permettant de brancher une alimentation d'eau. Des canules d'irrigation sont piquées sur le cadre et prolongées à l'intérieur de chaque dispositif.

La gaine plastique est réalisée par extrusion et soufflage d'une épaisseur comprise entre cent et trois cents microns, transparente ou non, perforée ou non.

Les montants sont réalisés en tube plastique par extrusion en continu ou en fer rond formé à froid.

Les intercallaires peuvent être réalisés en feuillard acier ou fer rond par formage à froid.

La tête peut être réalisée en matière plastique en moulage par injection ou en alliage léger par moulage en fonderie et usinage.

Les adapteurs sont réalisés en matière plastique en moulage par injection.

Le support est réalisé en matière plastique par extrusion en continu.

Le cadre peut être réalisé en tube acier mécano-soudé ou en tube plastique collé.

Les bras articulés sont réalisés en profilés marchands mécano-soudés.

Les canules sont réalisées en matière plastique par extrusion en continu.

La figure 1 représente en coupe le dispositif selon l'invention.

La figure 2 représente en coupe une variante de ce dispositif.

La figure 3 représente une vue d'ensemble de cette variante.

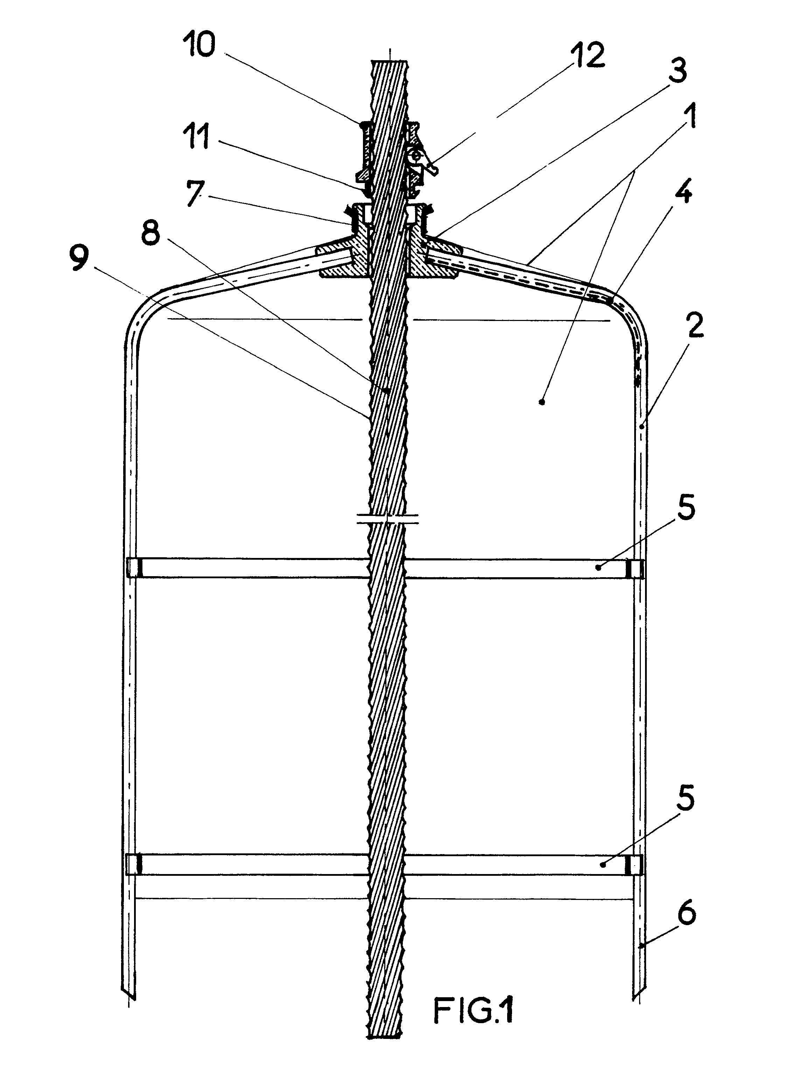

Le dispositif représenté sur la figure 1 comporte une gaine ouverte (1) dans laquelle sont enfilés quatre ou six montants (2) précontraints en (4) maintenus par une tête perforée (3). L'action de la contrainte (4) sur les montants (2) imprime une forme géométrique par réaction de la gaine (1), un, deux ou trois intercallaires (5) clipsés sur les montants (2) maintiennent la forme obtenue, une partie inférieure (6) sert d'encrage, la partie supérieure de la gaine (1) est rassemblée et maintenue autour de la tête (3) au moyen d'un lien en plastique (7), un support (8) comportant sur son pourtour et toute sa hauteur des rainures en torsade (9), un adapteur amovible (10) comportant un lardage en forme de collerette flexible (11) venue de moulage provoque le coincement lors de son emmanchement dans la tête (3) et un levier (12) en forme d'excentrique permet de positionner le dispositif le long du support (8).

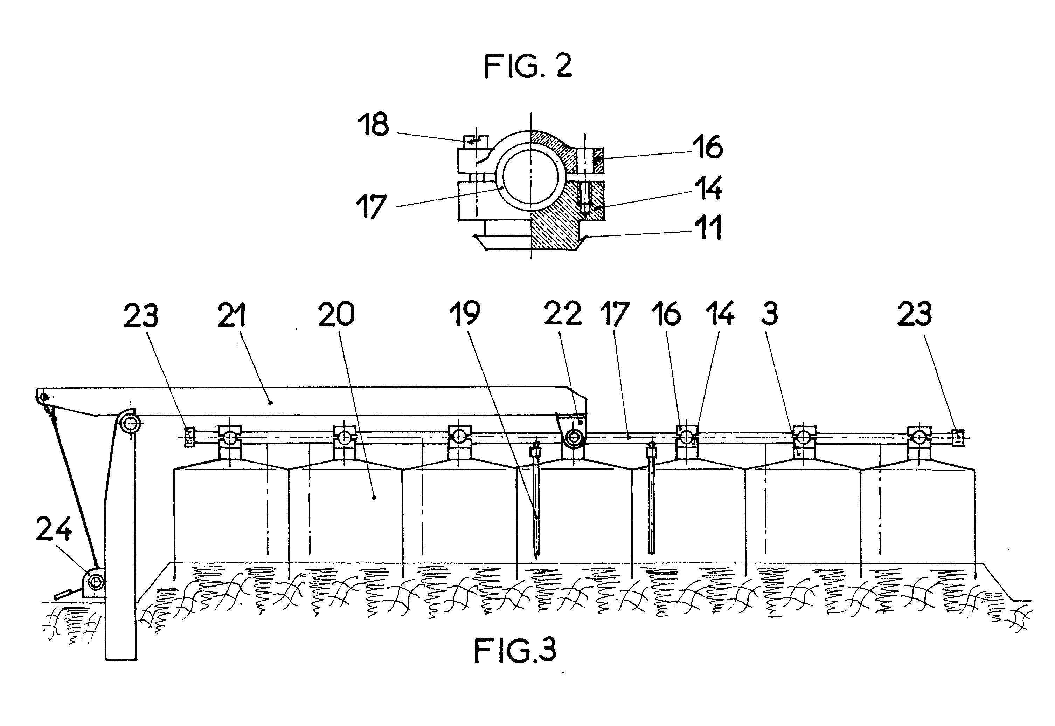

Selon une variante, représentée par les figures 2 et 3, il comporte un sabot (14), sur lequel un lardage en forme de collerette flexible (11) venue de moulage provoque le coincement lors de son emmanchement dans la tête (3), un étrier (16) vient serrer le sabot (14) au moyen de deux vis (18) sur un cadre tubulaire (17), le cadre tubulaire est muni de raccords (23) pour recevoir une alimentation d'eau, des canules d'irrigation (19) sont piquées sur le cadre (17) et prolongées dans chaque dispositif (20). Le cadre (17) est fixé en rotation au moyen de paliers lisses (22) et rendu escamotable par bras articulés (21) au moyen de crémaillères (24).

Le dispositif selon l'invention est particulièrement destiné à couvrir des surfaces plantées de plantes maraichères et d'ornement.

**Revendications**

1. Dispositif à effet de serre pour couvrir des surfaces plantées de plantes grimpantes. Caractérisé en ce qu il comporte une gaine plastique (1) dans laquelle sont introduits quatre ou six montants (2) précontraints en (4) et maintenus par une tête perforée (3), l'action de la contrainte (4) sur les montants (2) imprime une forme géométrique par réaction de la gaine (1), un deux ou trois intercallaires (5) sont clipsés sur les montants (2), un support (8) avec un adapteur amovible (10 )

2. Dispositif selon la revendication 1) caractérisé en ce que le support (8) comporte sur son pourtour et toute se hauteur des rainures en torsade (9).

3. Dispositif selon la revendication 1) ou la revendication 2) caractérisé en ce que l'adapteur amovible (10) comporte une collerette flexible (11) venue de moulage avec laquelle l'emmanchement force dans la tête (3) est assuré.

4. Dispositif selon la revendication précédente caractérisé en ce que l'adapteur (10) comporte un levier en forme d'excentrique (12) avec lequel un positionnement le long du support (8) est assuré.

5. Dispositif selon l'une quelconque des revendications précédentes caractérisé en ce qu'une partie des montants (2) assure un encrage (6).

6. Dispositif selon l'une quelconque des revendications précédentes caractérisé en ce qu'un sabot (14) et un étrier (16) forment un adapteur de fixation sur un cadre tubulaire (17).

7. Dispositif selon la revendication 6) caractérisé en ce que le sabot (14) comporte une collerette flexible (11) venue de moulage avec laquelle l'emmanchement forcé dans la tête (3) est assuré.

8. Dispositif selon l'une quelconque des revendications précédentes caractérisé en ce que le cadre tubulaire (17 ) est fixé en rotation par des paliers lisses (22) sur des bras (21).

9. Dispositif selon la revendication précédente caractérisée en ce que les bras (21) sont articulés et comportent des moyens de relevage à crémaillères (24).

10. Dispositif selon l'une quelconque des revendications précédentes caractérisé en ce que la cadre (17) est muni de raccords d'alimentation d'eau (23) et de canules d'irrigation (19) prolongées dans chaque dispositif (20).

11. Dispositif selon l'une quelconque des revendications précédentes caractérisé en ce que la gaine (1) est réalisée en matière plastique transparente ou non, perforée ou non.

12. Dispositif selon l'une quelconque des revendications précédentes caractérisé en ce que les montants (2) sont réalisés en tube plastique ou en fer rond.

13. Dispositif selon l'une quelconque des revendications précédentes caractérisé en ce que la tête (3) est réalisée en matière plastique rigide ou en alliage léger.

14. Dispositif selon l'une quelconque des revendications précédentes caractérisé en ce que les intercallaires (5) sont réalisés en feuillard acier ou en fer rond.

15. Dispositif selon l'une quelconque des revendications précédentes caractérisé en ce que l'adapteur (10), le sabot (14), l'étrier (16), le support (8), les canules (19) sont réalisés en matière plastique.

16. Dispositif selon l'une quelconque des revendications précédentes caractérisé en ce que le cadre (17) est réalisé en tube acier ou en plastique .

17. Dispositif selon l'une quelconque des revendications précédentes caractérisé en ce que les bras (21) sont réalisés en profilés marchands.

FIG.1

# FIG. 2

# FIG.3

EP 0 452 602 A1

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| E,X | FR-A-2 637 770 (GIMAY)<br>* revendications 1-17; figures 1, 2 *<br>– – – | 1-17 | A 01 G 13/04 |
| A | GB-A-2 051 537 (SAXBY)<br>* le document en entier *<br>– – – | 1 | |
| A | FR-A-2 610 475 (MERLOT)<br>* page 1, ligne 30 - page 3, ligne 11; figures 1-3 *<br>– – – | 1 | |
| A | DE-A-2 750 083 (SIMKA-GESELLSCHAFT FÜR APPARA-TEBAU)<br>* page 9, alinéa 2 - page 12, dernier alinéa * * page 15, dernier alinéa; figures 1, 2, 5 *<br>– – – | 1 | |
| A | WO-A-8 400 467 (PENTON)<br>* page 8, lignes 9 - 21; figure 6 *<br>– – – | 1 | |
| A | FR-A-2 511 221 (DALLE)<br>* page 7, lignes 18 - 25; figure 4 *<br>– – – – – | 10 | |

|  | DOMAINES TECHNIQUES RECHERCHES (Int. Cl.5) |
|---|---|
|  | A 01 G |

Le présent rapport de recherche a été établi pour toutes les revendications

| Lieu de la recherche | Date d'achèvement de la recherche | Examinateur |
|---|---|---|
| La Haye | 17 décembre 90 | HERYGERS J.J. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
              
& : membre de la même famille, document correspondant